# EUROPEAN PATENT APPLICATION

(11) **EP 0 825 206 A1**
(43) Date of publication of application: **25.02.1998**
(21) Application number: 97306163.3
(22) Date of filing: 13.08.1997
(51) Int. Cl.: C08F 212/06, C08F 220/12, C08L 77/00, C08L 67/00, C08L 69/00

(54) **Thermoplastic resin composition and compatibilizing agent used therein**

(30) Priority: 13.08.1996 JP 232457/96; 28.02.1997 JP 45812/97
(71) Applicant: DAI-ICHI KOGYO SEIYAKU CO., LTD., Shimogyo-ku Kyoto 600 (JP)
(72) Inventor: Kikuta, Manabu, Kyotanabe-shi, Kyoto 610-03 (JP); Hotta, Hiroshi, Kyoto-shi, Kyoto 610-11 (JP); Teramoto, Makato, Kyoto-shi, Kyoto 615 (JP)
(74) Representative: Wakerley, Helen Rachael

(57) **Abstract**

The thermoplastic resin composition comprising at least one resin selected from a polycarbonate resin, a polyamide resin and a polyester resin, at least one of a styrene type resin and a polyphenylene ether resin, and further, a copolymer, as a compatibilizing agent, comprising monomers consisting essentially of a monomer having a formamide group represented by the following general formula (1) and an aromatic vinyl type monomer: 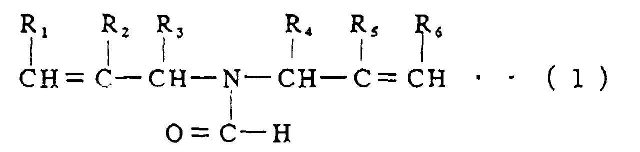 wherein R₁ , R₂, R₃, R₄, R₅ and R₆, which are the same or different, represent a hydrogen atom, an alkyl group with 1 to 8 carbon atoms, a cycloalkyl group with 6 to 10 carbon atoms, an alkyl aryl group with 6 to 10 carbon atoms, or an arylalkyl group with 6 to 10 carbon atoms.

The resultant thermoplastic resin composition is excellent in melt fluidity when molded, and a molded product using the thermoplastic resin composition as a molding material presents good appearance without interlaminar cleavage and is excellent in impact resistance. As a result, the thermoplastic resin compositions may be used for molding materials for molded products in the forms of sheet, film and the like in various molding methods such as injection molding, extrusion molding and the like.

## Description

### FIELD OF THE INVENTION

The present invention relates to a new thermoplastic resin composition which can be used in the form of molded products, sheets, films and the like which is produced by molding methods such as injection molding, extrusion molding and the like, and a new compatibilizing agent used therein.

### BACKGROUND OF THE INVENTION AND PRIOR ART

Engineering plastics, such as polycarbonate, polyamide, polyacetal, polybutylene terephthalate, polyphenylene ether, polyphenylene sulfide and the like, in general, have excellent mechanical properties, such as impact resistance and the like, and thermal properties, such as heat resistance and the like. Nevertheless, they have a problem of higher production costs caused by inferior processing properties. Moreover, some desired properties other than mechanical and thermal ones, for instance, chemical resistance or low water absorption, may not be included in with one or more of the above-mentioned engineering plastics. Meanwhile, due to its excellent heat resistance and dimensional stability among the above engineering plastics, polycarbonate resin is utilized in various fields, such as, for instance, the electrical, electronic, automobile and medical fields. Contrary to its excellent impact resistance, however, polycarbonate resin is high in both thickness dependency in terms of impact strength and notch sensitivity. Further, improvement in melt fluidity in molding has been required because of the recent trends to produce lightweight and thin-section molded products and to shorten the molding cycle.

Hence, many efforts have been made to blend or alloy the polycarbonate resin and another resin so as to complement with each other in their weak points and to provide new functional properties. With respect to techniques for improving melt fluidity, a known technique is to mix an acrylonitrile-butadienestyrene (ABS) resin with the polycarbonate resin (Japanese Patent Publication No. 15225/63). Recently, another technique of mixing a polystyrene resin with the polycarbonate resin has become known (Japanese Provisional Patent Publication No. 34915/96).

Simple blending, however, of two or more resins usually does not work well in terms of miscibility of the resins, and the resultant thermoplastic resin compositions in general have a lower impact resistance. When such blended thermoplastic resin compositions are molded into the desired shapes, the molded products have problems of inferior appearance and interlaminar cleavage. In the meantime, although the technique of mixing the ABS resin improves impact strength, such a technique is insufficient in terms of melt fluidity and processing temperature. As to the technique used to mix the polystyrene resin, the applicable range is limited because compatibilizing agents with limited SP values (solubility parameters) are used therein.

### SUMMARY OF THE INVENTION

The present invention was made under such circumstances. The present invention aims to provide a thermoplastic resin composition which has excellent impact resistance and melt fluidity and, when molded, presents good appearance without interlaminar cleavage and a compatibilizing agent used therein.

In a first aspect, the present invention provides a thermoplastic resin composition comprising the following Components (A), (B) and (C):
(A) at least one resin selected from a polycarbonate resin, a polyamide resin and a polyester resin,
(B) at least one of a styrene type resin and a polyphenylene ether resin, and
(C) a copolymer comprising monomers consisting essentially of a monomer having a formamide group represented by the following general formula (1) and an aromatic vinyl type monomer: 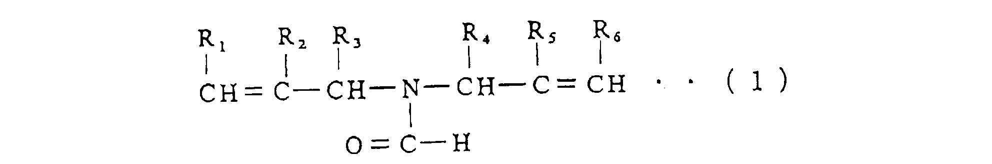 wherein R₁, R₂, R₃, R₄, R₅ and R₆, which are the same or different, represent a hydrogen atom, an alkyl group with 1 to 8 carbon atoms, a cycloalkyl group with 6 to 10 carbon atoms, an alkyl aryl group with 6 to 10 carbon atoms, or an arylalkyl group with 6 to 10 carbon atoms.

In a second aspect, the present invention provides a compatibilizing agent comprising a copolymer comprising monomers consisting essentially of a monomer having a formamide group represented by the above-indicated general formula (1) and an aromatic vinyl type monomer. In a third aspect, the present invention provides a compatibilizing agent comprising a copolymer comprising monomers consisting essentially of a monomer having a formamide group represented by the above-indicated general formula (1) and at least one of an acrylate monomer and a methacrylate monomer.

The inventors of the present invention compiled a series of studies to solve the above-mentioned problems. As a result, they found that, when a copolymer (Component (C)) comprising monomers consisting essentially of a monomer having a formamide group represented by the above general formula (1) and an aromatic vinyl type monomer is used as a compatibilizing agent, Components (A) and (B) can homogeneously be miscible with each other and dissolve, Components (A) and (B) may be compatible with each other, and the resultant thermoplastic resin composition has excellent impact resistance and melt fluidity and, when molded, presents good appearance.

It is a recent trend to attach importance to weld strength in injection molding using thermoplastic resin compositions, as the shapes of molded products have become complicated, and an improved weld strength is required. In view of such current situations, the inventors made further studies to improve weld strength in addition to solving the above-mentioned problems. As a result, they found that, when a copolymer (Component (D)) comprising monomers consisting essentially of a monomer having a formamide group represented by the above-mentioned general formula (1) and at least one of an acrylate monomer and a methacrylate monomer, together with Component (C), is further used as a new compatibilizing agent, the resultant thermoplastic resin composition is optimized due to the affinity between Components (A) and (B) and is excellent in the targeted properties.

Sufficient improved effects on impact resistance, in addition to a further improved miscibility between Components (A) and (B), may be obtained when an element derived from a monomer having the above formamide group is contained at 0.05 to 20 % by weight, and an element derived from the aromatic vinyl type monomer is contained at not less than 60 % by weight, of Component (C), the new compatibilizing agent. In the meantime, sufficient improved effects on impact resistance and weld strength, in addition to a further improved miscibility between Components (A) and (B), may be obtained when an element derived from a monomer having the formamide group is contained at 0.05 to 20 % by weight, and an element derived from at least one of an acrylate monomer and a methacrylate monomer is contained at not less than 50 % by weight, of Component (D), the new compatibilizing agent.

Embodiments of the present invention will hereinafter be described.

The thermoplastic resin composition according to the present invention comprises the following Components (A), (B) and (C):
(A)at least one resin selected from a polycarbonate resin, a polyamide resin and a polyester resin,
(B) at least one of a styrene type resin and a polyphenylene ether resin, and
(C) a copolymer comprising monomers consisting essentially of a monomer having a formamide group represented by the above general formula (1) and an aromatic vinyl type monomer.

The polycarbonate resins of Component (A) may be both aliphatic and aromatic polycarbonate resins. Examples of such polycarbonate resins include polymers and copolymers comprising bisphenols such as a 2,2'-bis(4-hydroxyphenyl)alkane type, a 2,2'-bis(4-hydroxy-3,5-dimethylphenyl)alkane type, 2,2'-bis(4-hydroxy-3,5-dipropylphenyl)alkane type sulfone, sulfide and a sulfoxide type.

In addition to the above polycarbonate resins, commercially available polycarbonate resins may be used for the polycarbonate resin of Component (A). Examples of such polycarbonate resins include Taflon series (manufactured by Idemitsu Sekiyu Kagaku Co., Ltd.), Iupilon series (manufactured by Mitsubishi Engineering-Plastics Corporation), Panlite series (manufactured by Teijin Chemical Limited), Lexan series (manufactured by Nippon G.E. Plastics Co., Ltd.), Calibre series (manufactured by Sumitomo Dow Limited), and Makroron series (manufactured by Bayer AG).

The polyamide resins of Component (A) may be aliphatic polyamides such as nylon 6, nylon 6,6, nylon 6,10, nylon 11, nylon 12, nylon 6,12, nylon 4,6 and the like, and aromatic polyamides such as polyhexamethylenediamine terephthalamide, polyhexamethylenediamine isophthalamide, polyamides having xylene groups and the like. Moreover, polyesteramides, polyesteretheramides and the like may be used.

The polyester resins of Component (A) may be polyethylene terephthalate, polybutylene terephthalate, polycyclohexane dimethylphthalate, polyalylate and the like.

The above-recited resins for Component (A) are used solely or in combination. From the viewpoint of its particular high impact strength, the polycarbonate resin is preferable for use.

The styrene type resins of Component (B) may a styrene homopolymer and compositions of a styrene homopolymer or a styrene copolymer and a rubber material such as a high impact polystyrene resin, an ABS resin, an AS resin (an acrylonitrile-styrene copolymer), an AAS resin (an acrylonitrile-acrylic rubber-styrene copolymer) and an AES resin (an acrylonitrile-ethylacrylate-styrene copolymer). In addition, there may be styrene type thermoplastic elastomers such as an SEBS resin (hydrogenated styrene- butadiene-styrene block copolymer), an SEPS resin (hydrogenated styrene- isoprene-styrene block copolymer) and an SEP resin (hydrogenated styrene-isoprene block copolymer).

The above rubber materials include a polybutadiene rubber, a polyisoprene rubber, a polyurethane elastomer, an ethylene-acrylate copolymer, an ethylene-methacrylate copolymer, the above-recited styrene type thermoplastic elastomers and the like.

Among such styrene type resins, the high impact polystyrene resin and the compositions of a styrene homopolymer or a styrene copolymer and a rubber material in particular are preferable. As the high impact polystyrene, commercially available resins may be used. Commercial high impact polystyrene resins include Sumibrite series (manufactured by Sumitomo Chemical Company, Limited), Estyrene series (manufactured by Nippon Steel Chemical Corporation Limited), Idemitsu styrol HT series (manufactured by Idemitsu Sekiyu Kagaku Co., Ltd.), Diarex series (manufactured by Mitsubishi Chemical Corporation), Denka styrol HI series (manufactured by Denki Kagaku Kabushiki Kaisya), Dicstyrene GH series (manufactured by Dainippon Ink and Chemicals Incorporated), Asahi Chemical polystyrene series (manufactured by Asahi Chemical Industry Co., Ltd.), Esbrite series (manufactured by Showa Denko K. K. ) and Toporex series (manufactured by Mitsui Toatsu Chemicals Inc.).

Specific examples of the polyphenylene ether resins for Component (B) are homopolymers or copolymers of 2,6-dimethylphenol, 2,6-diethylphenol, 2,6-dipropylphenol, 2-methyl-6-ethylphenol, 2-methyl-6-propylphenol, 2-ethyl-6-propylphenol, m-cresol, 2,3-dimethylphenol, 2,3-diethylphenol, 2,3-dipropylphenol, 2-methyl-3-ethylphenol, 2-methyl-3-propylphenol, 2-ethyl-3-methylphenol, 2-ethyl-3-propylphenol, 2-propyl-3-methylphenol, 2-propyl-3-ethylphenol, 2,3,6-trimethylphenol, 2,3,6-triethylphenol, 2,3,6-tripropylphenol, 2,6-dimethyl-3-ethylphenol and 2,6-dimethyl-3-propylphenol.

Component (C) which is used in combination with Components (A) and (B) is capable of functioning as a compatibilizing agent and comprises a copolymer comprising monomers consisting essentially of a monomer having a formamide group represented by the following general formula (1) and an aromatic vinyl type monomer: 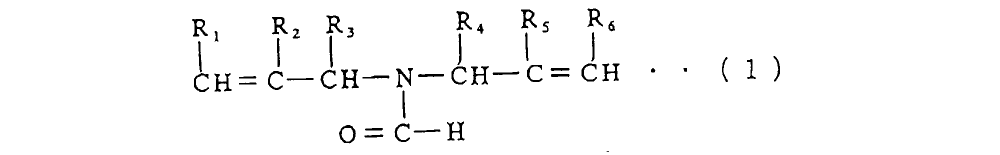 wherein R₁, R₂, R₃, R₄, R₅ and R₆, which are the same or different, represent a hydrogen atom, an alkyl group with 1 to 8 carbon atoms, a cycloalkyl group with 6 to 10 carbon atoms, an alkyl aryl group with 6 to 10 carbon atoms, or an arylalkyl group with 6 to 10 carbon atoms.

It is preferable that R₁, R₂, R₄, R₅ and R₆ in the above general formula (1) be independent and represent a hydrogen atom or an methyl group.

When explained in more detail, the monomers having formamide groups represented by the above general formula (1) include N,N-diallylformamide, N,N-di-(1-methyl-2-propenyl)formamide, N,N-di-(1-ethyl-2-propenyl)formamide, N,N-di-(1-n-propyl-2-propenyl)formamide, N,N-di-(1-n-butyl-2-propenyl)formamide, N,N-di-(n-hexyl-2-propenyl)formamide, N,N-di-(1-benzyl-2-propenyl)formamide, N,N-di-(2-methyl-2-propenyl)formamide, N-allyl-N-(1-methyl-2-propenyl)formamide, N-allyl-N-(1-ethyl-2-propenyl)formamide, N-allyl-N-(2-methyl-2-propenyl)formamide and the like. Of these, it is especially preferable to use N,N-diallylformamide in which R₁, R₂, R₃, R₄, R₅ and R₆ are all hydrogen atoms.

The aromatic vinyl type monomers may be styrene, p-methylstyrene, α -methylstyrene, p-tert-butylstyrene, p-chlorostyrene, p-bromostyrene, 2,4,5-tribromostyrene and the like. They are used solely or in combination.

For such aromatic vinyl type monomers, monomer compositions of the aromatic vinyl type monomer and one or more monomers copolymerizable therewith may be used. A preferable example of the aromatic vinyl type monomers is a composition consisting essentially of styrene, and a more preferable example is styrene alone.

The monomers copolymerizable with the aromatic vinyl type monomer may be an acrylate monomer, a methacrylate monomer, an unsaturated nitrile monomer, an acrylic acid monomer, a methacrylic acid monomer, an α , β -unsaturated carboxylic acid anhydride, a maleimide type monomer and the like.

The acrylate monomers include methyl acrylate, ethyl acrylate, propyl acrylate, butyl acrylate, octyl acrylate, stearyl acrylate and the like, having an alkyl group with 1 to 18 carbon atoms. The methacrylate monomers include methyl methacrylate, ethyl methacrylate, propyl methacrylate, butyl methacrylate, octyl methacrylate, stearyl methacrylate, lauryl methacrylate and the like, having an alkyl group with 1 to 18 carbon atoms. Preferable examples are ethyl acrylate, propyl acrylate, butyl acrylate, octyl acrylate, butyl methacrylate, octyl methacrylate and lauryl methacrylate. It is possible to use each of the acrylate monomer and the methacrylate monomer in the form of the monomer composition, in which each of the acrylate monomers and the methacrylate monomers and one or more monomers copolymerizable therewith are included.

The unsaturated nitrile monomers include acrylonitrile, methacrylonitrile and the like.

The α , β -unsaturated carboxylic acid anhydrides include maleic anhydride and itaconic anhydride.

Among the monomers copolymerizable with the aromatic vinyl type monomer, an acrylate monomer, a methacrylate monomer and an unsaturated nitrile monomer are preferable.

In Component (C) used in the present invention, the monomer copolymerizable with the aromatic vinyl type monomer in the copolymer preferably accounts for 0 to 40 % by weight of the monomer composition, more preferably, 0 to 25 % by weight.

An element derived from the formamide group-containing monomer preferably accounts for 0.05 to 20 % by weight of the copolymer, Component (C), more preferably 0.2 to 10 % by weight. An element derived from the aromatic vinyl type monomer preferably accounts for not less than 60 % by weight of the copolymer, Component (C), more preferably not less than 75 % by weight. Namely, if, in the copolymer of Component (C), the element derived from the formamide group-containing monomer is less than 0.05 % by weight and/or the element derived from the aromatic vinyl type monomer is less than 60 % by weight, the miscibility between Components (A) and (B) in the resultant thermoplastic resin composition tends to deteriorate. In the meantime, if the element derived from the formamide group-containing monomer is over 20 % by weight, the manufacture of the copolymers, Component (C), consisting essentially of the formamide group-containing monomer and the aromatic vinyl type monomer becomes less economic, resulting in a less economic production cost for the thermoplastic resin compositions.

The ratio (the added amount) of the element derived from the formamide group-containing monomer in the copolymer of Component (C) can be determined by measuring the amount of formyl groups by the infrared absorption spectrum (the IR spectrum). That is, such a ratio can be determined by comparing the ratio of the absorbance within the absorption band of 1590 to 1610 cm⁻¹ that is unique to the element derived from the aromatic vinyl type monomer and the absorbance within the absorption band of 1650 to 1700 cm⁻¹ that is unique to the element derived from the formamide group-containing monomer.

The weight-average molecular weight of Component (C) is preferably 5.0 × 10³ to 2.0 × 10⁶, more preferably 1.0 × 10⁴ to 1.0 × 10⁶.

Component (C) is an addition polymer which is produced by known polymerization methods such as bulk polymerization, solution polymerization, suspension polymerization, emulsion polymerization, precipitation polymerization and the like. Among those methods, solution polymerization or emulsion polymerization is preferable, and emulsion polymerization is more preferable.

The copolymerization reactions of such monomers utilize radical generating catalysts such as a peroxide or an azo compound. The radical generating catalysts include benzoyl peroxide, t-butylbenzoate, cyclohexane peroxide, azobisisobutyronitrile, similar thereof and their mixtures.

Among the foregoing polymerization methods, one example of the specific method of manufacturing Component (C) by solution polymerization will be described. A given amount of the monomers and the radical generating catalyst are dissolved in a solvent, and the mixture is heated up to the temperature at which the radical generating catalyst generates radicals. After the reaction proceedes for a certain period of time at the same temperature, the resultant reaction product is subjected to a few washings with a non-solvent such as methanol, and is dried under reduced pressure. The copolymer of Component (C) thus is obtained.

The solvents used in the solution polymerization are not limited to any specific solvents, as long as the solvents can dissolve each monomer and the radical generating catalysts and are liquid at the reaction temperatures in which the solvents are used. Examples of suitable solvents include aromatic series solvents such as benzene, toluene, xylene, chlorobenzene, dichlorobenzene, trichlorobenzene and the like and aliphatic series solvents such as ethyl acetate, dioxane, N,N-dimethylformamide, dimethyl sulfoxide and the like.

Among the foregoing polymerization methods, one example of the specific method of manufacturing Component (C) by emulsion polymerization will be described. A given amount of the monomers, distilled water and a dispersing agent are stirred so as to disperse the monomers in water, a given amount of the radical generating catalyst is added thereto, and the mixture is heated up to the temperature at which radicals are generated. After given amounts of the monomers and radical generating catalyst are reacted at the same temperature, the reaction liquid is poured into a non-solvent such as methanol so as to precipitate a copolymer. This copolymer is washed with water and a non-solvent a few times and dried under reduced pressure. The copolymer of Component (C) is thus obtained.

Among the radical generating catalysts in the emulsion polymerization, water-soluble radical generating catalysts are preferable. Specific examples of those are 2,2-azobis(N,N'-dimethyleneisobutylamidine)hydrochloride, 2,2-azobis(2-amidino-propane)hydrochloride, 2-(carbamoylazo)isobutyronitrile hydrochloride and peroxo sulfate. The addition amounts of such radical generating catalysts are the same as those in known radical polymerizations. It is, however, particularly helpful if such amounts range from 0.05 to 5.0 % by weight of the monomer compositions. Moreover, the reaction temperature should be high enough so that the radical generating catalysts can generate radicals.

The dispersing agents used in the emulsion polymerization may be general surfactants. It is in particular preferable, however, to use an anion type surfactant and a nonionic type surfactant.

The anion surfactants include a soap, a rosined soap, alkylbenzenesulfonate, alkyl sulfate, alkanesulfonate, alkyl ether sulfonate, dialkyl sulfosuccinate and naphthalenesulfonates and formaldehyde polycondensation. The nonionic surfactants include polyoxyethylene alkyl ether, polyoxyethylene alkyl aryl ether and polyvinyl alcohol. The dispersing agent is used as a composition in which the above surfactants are used solely or in combination.

A reaction medium in the emulsion polymerization may be water alone or a mixture of water and one or more organic media. The organic media are not limited to any specific organic media, as long as such media are solvents which can dissolve aromatic vinyl monomers and monomers copolymerizable therewith, and which do not mix completely, presenting separate layers, when mixed with water at a volume ratio of 1:1. Specific examples of such organic solvents may be benzene, toluene, ethylbenzene, xylene, monochloro benzene, dichlorobenzene, chloroform, cumene, heptane and butyl alcohol.

To improve weld strength in injection molding, the foregoing Component (D) is further used, in addition to Components (A), (B) and (C), according to the present invention.

Component (D), used together with Components (A), (B) and (C), is capable of functioning as a compatibilizing agent, like Component (C). Component (D) is a copolymer which consists essentially of a monomer having a formamide group represented by the above general formula (1) and at least one of an acrylate monomer and a methacrylate monomer, and is an addition polymer which is produced by known polymerization methods such as bulk polymerization, solution polymerization, suspension polymerization, emulsion polymerization, precipitation polymerization and the like. It is preferable to produce Component (D) by solution polymerization or emulsion polymerization, more preferably, by emulsion polymerization. Polymerizing methods of Component (D) are the same as those of Component (C).

The monomer having a formamide group represented by the general formula (1) is the same as that used for Component (C).

The acrylate monomers include methyl acrylate, ethyl acrylate, propyl acrylate, butyl acrylate, octyl acrylate, stearyl acrylate and the like, having an alkyl group with 1 to 18 carbon atoms. The methacrylate monomers include methyl methacrylate, ethyl methacrylate, propyl methacrylate, butyl methacrylate, octyl methacrylate, stearyl methacrylate, lauryl methacrylate and the like, having an alkyl group with 1 to 18 carbon atoms. Preferable examples are ethyl acrylate, propyl acrylate, butyl acrylate, octyl acrylate, butyl methacrylate, octyl methacrylate and lauryl methacrylate.

It may be possible to use at least one of the acrylate monomer and the methacrylate monomer as a monomer composition, in which the acrylate monomer and/or the methacrylate monomer and one or more monomers copolymerizable therewith are included. The monomers copolymerizable with the ester monomers are, for instance, an aromatic vinyl type monomer, an unsaturated nitrile monomer, an acrylic acid monomer, a methacrylic acid monomer, an α, β -unsaturated carboxylic acid anhydride and a maleimide monomer.

The aromatic vinyl type monomers may be styrene, p-methylstyrene, α -methylstyrene, p-tert-butylstyrene, p-chlorostyrene, P-bromostyrene, 2,4,5-tribromostyrene and the like.

The unsaturated nitrile monomers include acrylonitrile, methacrylonitrile and the like.

The α, β -unsaturated carboxylic acid anhydrides include maleic anhydride and itaconic anhydride.

The monomer copolymerizable with at least one of the acrylate monomer and the methacrylate monomer preferably accounts for 0 to 50 % by weight of the monomer composition, more preferably 0 to 30 % by weight.

An element derived from at least one of the acrylate monomer and the methacrylate monomer preferably accounts for not less than 50 % by weight of the copolymer, Component (D), more preferably not less than 70 % by weight. An element derived from the formamide group-containing monomer preferably accounts for 0.05 to 20 % by weight of the copolymer, Component (D), more preferably 0.2 to 10 % by weight. Namely, if, in the copolymer of Component (D), the element derived from the formamide group-containing monomer is less than 0.05 % by weight or the element derived from at least one of the acrylate monomer and the methacrylate monomer is less than 50 % by weight, the resultant thermoplastic resin composition exhibits insufficient improvement in impact resistance and weld strength.

The ratio (the added amount) of the element derived from the formamide group-containing monomer in the copolymer of Component (D) can be determined by the infrared absorption spectrum (the IR spectrum). That is, such a ratio can be determined by comparing the ratio of the absorbance within the absorption band of around 1720 cm⁻¹ that is unique to the element derived from at least one of the acrylate monomer and the methacrylate monomer and the absorbance within the absorption band of around 1650 cm⁻¹ that is unique to the element derived from the formamide group-containing monomer.

The weight-average molecular weight of Component (D) is preferably 5.0 × 10³ to 2.0 × 10⁶, more preferably 1.0 × 10⁴ to 1.0 × 10⁶.

When Components (A), (B), (C) and (D) are used, as essential components, to produce the thermoplastic resin composition according to the present invention, the following is believed. If Component (C) is a copolymer which comprises at least one of the acrylate monomer and the methacrylate monomer as well as the monomer having a formamide group represented by the general formula (1) and the aromatic vinyl type monomer, and Component (D) is a copolymer which comprises the aromatic vinyl type monomer as well as the monomer having a formamide group represented by the general formula (1) and at least one of the acrylate monomer and the methacrylate monomer, Components (C) and (D) have the same monomer components. However, since Component (C) consists essentially of the monomer having a formamide group and the aromatic vinyl type monomer and Component (D) consists essentially of the monomer having a formamide group and at least one of the acrylate monomer and the methacrylate monomer, the component with a higher ratio of the aromatic vinyl type monomer is Component (C) and the component with a higher ratio of at least one of the acrylate monomer and the methacrylate monomer is Component (D), disregarding the ratios of the common component of the formamide group consisting-monomer.

Regarding the mixing ratios of Component (A) and (B) among the components comprised in the thermoplastic resin composition according to the present invention, it is preferable that, when the total of Components (A) and (B) is 100 parts by weight, Component (A) is contained at 10 to 90 parts by weight and Component (B) in contained at 90 to 10 parts by weight, more preferably Component (A) in contained at 50 to 90 parts by weight and Component (B) is contained at 50 to 10 parts by weight, and most preferably Component (A) is contained at 50 to 85 parts by weight and Component (B) in contained at for 50 to 15 parts by weight. Namely, when the mixing ratio of Components (A) and (B) is outside of the ranges described above, the resultant thermoplastic resin composition tends to deteriorate in its mechanical strength such as impact strength and the like.

When the total of Components (A) and (B) is 100 parts by weight, the content of Component (C) mixed therein is preferably from 0.05 to 20 parts by weight, more preferably from 0.5 to 15 parts by weight. That is, when the content of Component (C) is less than 0.05 part by weight, the miscibility between Components (A) and (B) and mechanical strength such as impact strength and the like of the thermoplastic resin composition deteriorate, and physical properties may not be improved. Even it the content of Component (C) exceeds 20 parts by weight, further effects are not proportional to such a content, resulting in economical disadvantages in the production of the thermoplastic resin compositions.

Regarding the case where Component (D) is used in addition to Components (A), (B) and (C), when the total of Components (A) and (B) is 100 parts by weight, the content of Component (D) mixed therein is preferably from 0.05 to 20 parts by weight, more preferably from 0.5 to 15 parts by weight. That is, when the content of Component (D) is less than 0.05 part by weight, impact resistance improves to some extent due to the compatibilizing effect by Component (C). In that case, however, the improvement level of the value of impact energy greatly varies depending on the kind of polystyrene type resins to be used as Component (B), and further , it is difficult to improve weld strength. Even if the content of Component (D) exceeds 20 parts by weight, further effects are not proportional to such a content, resulting in economical disadvantages in the production of the thermoplastic resin compositions.

The thermoplastic resin composition according to the present invention comprises Components (A), (B) and (C), and optionally Component (D). If necessary, however, other additives, for example, reinforcements such as glass fiber, carbon fiber and the like, an inorganic filler, a thermal stabilizer, an antistatic agent, an antioxidant, an ultraviolet ray absorbent, a fire retardant and/or the like, may be added.

Mixing methods of each component in the production of the thermoplastic resin composition according to the present invention include, for example, a melting-and-mixing method. When using Components (A), (B) and (C), for example, given amounts of Components (A), (B) and (C) in a pellet or powder state are mixed and the mixture is then heated so as to melt and mix. Alternatively, Component (B) is added to a composition, in which Components (A) and (C) are already melted and mixed, so as to melt and mix. Both methods provide similar thermoplastic resin compositions. When using Components (A), (B), (C) and (D), given amounts of Components (A), (B), (C) and (D) in a pellet or powder state are mixed and the mixture is then heated so as to melt and mix. Alternatively, Component (B) is added to a composition, in which Components (A) , (C) and (D) are already melted and mixed, so as to melt and mix. Both methods provide similar thermoplastic resin compositions.

A more specific example of a method of producing the thermoplastic resin composition according to the present invention will hereinafter be described. That is, kneading machines such as a single-screw extruder and a double-screw extruder, a Banbury mixer and a kneading roller and the like or mixing machines such as a Henschel mixer and the like may be used to mix the above-mentioned Components (A), (B) and (C), and optionally Component (D). If desired, further additives may be added thereto under heated and melted conditions. The heating and melting temperature depends on the components to be used, the mixed quantities, and the physical properties of the thermoplastic resin composition to be produced. Such a temperature, however, is normally 180 to 340°C.

In the present invention, it is believed that Component (C), a copolymer of a formamide group-containing monomer and an aromatic vinyl type monomer, improves the miscibility between Components (A) and (B) and, when using Component (D), a copolymer of a formamide group containing-monomer and at least one of an acrylate monomer and a methacrylate monomer, Component (D) appropriately adjusts the affinity between Components (A) and (B). The development mechanisms of such effects are considered to be as follows.

First, the formamide group portion of the formamide group-containing monomer of Component (C) is decomposed by the action of heat during melting and mixing and is changed into amino groups. Subsequently, the amino groups react with binding sites of the polycarbonate, polyamide and polyester, respectively, of Component (A) so as to form a compatibilizing agent in which Components (A) and (C) are combined. As a result, it is believed that the miscibility between the resin of Component (A) and that of Component (B) improves and other physical properties greatly improve. Moreover, when using Component (D), the formamide group portion of the formamide group- containing monomer of Component (D) is also decomposed by the action of heat during melting and mixing and is changed into amino groups. Subsequently, the amino groups react with binding sites of the polycarbonate, polyamide and polyester, respectively, of Component (A) so as to form a composition in which Components (A) and (D) are combined. As a result, it is believed that the miscibility between the resin of Component (A) and that of Component (B) further improves while the affinity between Components (A) and (B) is appropriately adjusted, and other physical properties greatly improve.

A compatibilizing agent according to the present invention is the one which acts on a dispersion interface between the resin of Component (A) and the resin of Component (B), decreases the interfacial tension between the dispersed phase and the matrix phase and stabilizes the dispersion interface.

Embodiments of the present invention and Comparative Examples will hereinafter be described.

(1) The case where three components, that is, Components (A), (B) and (C), are used in the thermoplastic resin composition according to the present invention will be discussed.

First, Component (C) was prepared by the following manufacturing methods,

### [Example of manufacturing copolymer la, Component (C), by emulsion polymerization]

94 g of styrene, 6 g of N,N-diallylformamide, 3 g of rosined soap and 397 g of water were charged to a 1000 ml flask which was equipped with a stirring apparatus, a heating apparatus, a dropping funnel, a thermometer, a reflux condensing apparatus and a nitrogen feed tube. After the mixture was stirred at a high speed to disperse the monomer composition, 30 g of an aqueous solution containing 3 % ammonium persulfate was added thereto so as to react at 70 °C for 6 hours. Subsequently, after being cooled to 30 °C, the reaction solution was added to 5000 ml of methanol with stirring to precipitate a copolymer. The precipitated copolymer was subjected to repetitive filtration and washing by methanol, and then dried under reduced pressure. A copolymer la was thus obtained. This copolymer la contained 1.5 % by weight of the formyl group, which was evaluated by the ratio of the peak strengths of 1660 cm⁻¹ and 1600 cm⁻¹ measured by the IR spectrum. The weight-average molecular weight of the copolymer was 5.1 × 10⁵, which was measured by gel permeation chromatography.

### [Example of manufacturing copolymers 1b - 1j, Component (C), by emulsion polymerization]

Monomers, dispersing agents and polymerization initiators shown in the following Tables 1 and 2 were used in the ratios shown in those Tables. Except for those differences, the same procedure as that used to prepare copolymer 1a was repeated so as to obtain copolymers 1b - 1j.

**TABLE 1**

| | Aromatic vinyl monomer | Monomer copolymerizable with aromatic vinyl monomer | Monomer having a formamide group | Dispersing agent |
|---|---|---|---|---|
| Copolymer 1b | Styrene 94 g | - | N,N-diallyl-formamide 6 g | Rosined soap 3 g |
| Copolymer 1c | Styrene 80 g | Methyl methacrylate 14 g | N-allyl-N-(1-methyl-2-propenyl) formamide 6 g | Sodium lauryl sulfate 2 g |
| Copolymer 1d | Styrene 90 g | - | N,N-diallyl-formamide 10 g | Sodium alkylbenzenesulfonate 3g |
| Copolymer 1e | α-methyl-styrene 5 g | - | N,N-di-(2-metyl-2-propenyl) | Sodium alkylbenzenesulfonate |
| | Styrene 85 g | | formamide 10 g | 2 g |
| Copolymer 1f | Styrene 90 g | - | N-allyl-N-(2-methyl-2-propenyl)formamide 10 g | Sodium lauryl sulfate 2 g |

| | Polymerization initiator | Organic solvent or Chain transfer agent | Addition amount of formamide group-containing monomer in copolymer (% by weight) | Weight-average molecular weight |
|---|---|---|---|---|
| Copolymer 1b | Potassium peroxosulfate 0.2 g | - | 1.2 | 7.1 × 10⁵ |
| Copolymer 1c | 2,2-azobis(2-amidino-propane)hydrochloride 0.5 g | - | 1.1 | 1.2 × 10⁵ |
| Copolymer 1d | 2,2-azobis(N,N'-dimethyleneisobutylamidine)hydrochloride 0.7 g | α-methylstyrene dimer 0.5 g | 2.0 | 6.1 × 10³ |
| Copolymer 1e | Potassium peroxosulfate 0.5 g | - | 1.5 | 8.2 × 10⁴ |
| Copolymer 1f | Potassium peroxosulfate 0.5 g | - | 2.5 | 8.0 × 10⁴ |

**TABLE 2**

| | Aromatic vinyl monomer | Monomer copolymerizable with aromatic vinyl monomer | Monomer having a formamide group | Dispersing agent |
|---|---|---|---|---|
| Copolymer 1g | Styrene 70 g | Ethyl acrylate 24 g | N,N-di-(1-n-propyl-2-propenyl) formamide 6 g | Polyoxyethylene alkyl aryl ether 1.5 g Rosined soap 1.5 g |
| Copolymer 1h | Styrene 94 g | - | N,N-diallyl-formamide 6 g | Sodium alkylbenzenesulfonate 3 g |
| Copolymer 1i | Styrene 90 g | - | N,N-diallyl-formamide 10 g | Sodium alkylbenzenesulfonate 3 g |
| Copolymer 1j | Styrene 75 g | - | N,N-di-(1-benzyl-2-propenyl)formamide 10 g N,N-diallyl-formamide 15 g | Sodium alkylbenzenesulfonate 3 g |

| | Polymerization initiator | Organic solvent or Chain transfer agent | Addition amount of formamide group-containing monomer in copolymer (% by weight) | Weight-average molecular weight |
|---|---|---|---|---|
| Copolymer 1g | Potassium peroxosulfate 0.3 g | Benzene 60 g | 1.3 | 7.5 × 10⁴ |
| Copolymer 1h | Potassium peroxosulfate 0.5 g | Ethylbenzene 60 g | 0.6 | 6.4 × 10⁴ |
| Copolymer 1i | 2,2-azobis(2-amidino-propane)hydrochloride 0.5 g | Chlorobenzene 180 g | 0.5 | 2.5 × 10⁴ |
| Copolymer 1j | 2,2-azobis(2-amidino-propane)hydrochloride 2.0 g | - | 14.5 | 8.0 × 10⁴ |

### [Example of manufacturing copolymer 2a, Component (C), by solution polymerization]

100 g of styrene, 6 g of N,N-diallylformamide, 400 g of benzene and 1 g of benzoyl peroxide were charged to a 1000 ml flask which was equipped with a stirring apparatus, a heating apparatus, a thermometer, a reflux condensing apparatus and a nitrogen feed tube. The mixture was then heated to 70 °C and allowed to react for 5 hours. Subsequently, after being cooled to 30 °C, the reaction solution was added to 5000 ml of methanol with stirring to precipitate a copolymer. The precipitated copolymer was subjected to repetitive filtration and washing by methanol, and then dried under reduced pressure, A copolymer 2a was thus obtained. This copolymer 2a contained 1-1 % by weight of the formyl group, which was evaluated by the ratio of the peak strengths of 1660 cm⁻¹ and 1600 cm⁻¹ measured by the IR spectrum. The weight-average molecular weight of the copolymer was 7.2 × 10⁴, which was measured by gel permeation chromatography.

### [Example of manufacturing copolymer 2b, Component (C), by emulsion polymerization]

Instead of N,N-diallylformamide, N,N-di-(1-methyl-2-propenyl)formamide was used. Except for that substitution, the same procedure as that used for preparing copolymer 2a was repeated to obtain a copolymer 2b, which contained 1.6 % by weight of the formyl group and had a weight-average molecular weight of 5.5 × 10⁴.

### EMBODIMENTS 1 - 19 AND COMPARATIVE EXMPLES 1 - 17

First, the resins used for Components (A) and (B) were obtained, respectively, as shown in the following.

### [Resins for Component (A)]

PC1: polycarbonate (TaflonA-2200, manufactured by Idemitsu Sekiyu Kagaku Co., Ltd.)
PC2: polycarbonate (TaflonA-3000, manufactured by Idemitsu Sekiyu Kagaku Co., Ltd.)
PA: polyamide (Leona 1300S, manufactured by Asahi Chemical Industry Co., Ltd.)
PBT: polybutylene terephthalate (Toray PBT resin 1401-X06, manufactured by Toray Industries, Inc.)

### (Resins for Component (B)]

HIPS1: high impact polystyrene (Sumibrite DJ-7000, manufactured by Sumitomo Chemical Company, Ltd.)
HIPS2: high impact polystyrene (Estyrene H-53, manufactured by Nippon Steel Chemical Corporation Limited)
HIPS3: high impact polystyrene (Estyrene H-78, manufactured by Nippon Steel Chemical Corporation Limited)
HIPS4: high impact polystyrene (Estyrene H-65, manufactured by Nippon Steel Chemical Corporation Limited)
HIPS5: high impact polystyrene (Idemitsu styrol HT-52, manufactured by Idemitsu Sekiyu Kagaku Co., Ltd.)
ABS: ABS resin (Toyorak 500, manufactured by Toray Industries, Inc.)
SEBS1: SEBS resin (Tuftec H1051, manufactured by Asahi Chemical Industry Co., Ltd.)
PPE: polyphenylene ether resin (Iupiace AH-40, manufactured by Mitsubishi Engineering-Plastics Corporation)
GPPS: polystyrene resin (Estyrene G-20, manufactured by Nippon Steel Chemical Corporation Limited)

Components (A), (B) and (C) shown in undermentioned Tables 3, 4 and 5 were mixed in the ratios shown in those Tables to prepare thermoplastic resin compositions of a three-component type according to one of the following Methods a and b.

### [Method a]

Components (A), (B) and (C) were dry-blended at the ratios shown in Tables 3 - 5 and then dried. The blend was then melted and mixed by a double screw extruder (KRC kneader, manufactured by Kurimoto Tekkosho). The mixture was thereafter taken out and pelletized to obtain a thermoplastic resin composition.

### [Method b]

Components (A) and (C) were dry-blended at the ratios shown in Tables 3 - 5 and then dried. The blend was then melted and mixed by a double screw extruder (KRC kneader, manufactured by Kurimoto Tekkosho). The mixture was thereafter taken out and pelletized. Subsequently, Component (B) was mixed in the thus obtained pellets at the ratios shown in Tables 3 - 5, and the mixture was melted and mixed again by the double screw extruder. The resultant mixture was thereafter taken out and pelletized to obtain a thermoplastic resin composition.

The thermoplastic resin compositions of the three-component type thus obtained were processed by an injection molding machine (Hipershot 3000, manufactured by Niigata Tekkosho) to obtain moldings. The moldings were measured and evaluated according to the following evaluation methods in terms of Izod impact strength, appearance and cleavage, and the results are shown in Tables 3 - 5.

### [Izod impact strength]

Izod impact values were measured according to Japanese Industrial Standard (JIS) K-6719, at a measuring temperature of 23 °C. In order to consider thickness dependency, Izod impact values of 2-A test pieces (12.7 mm thickness) according to JIS-7110 were also measured and shown for Embodiments 1 - 9 and Comparative Examples 1 - 7.

### [Appearance]

Regarding the appearance and hue of the moldings, the moldings were visually examined for flow marks, fuzz, silver streaks and coloring. Moldings with good appearance are marked with ○, those with a somewhat defective appearance are marked with Δ and those with defective appearance are marked with × .

### [Presence or absence of interlaminar cleavage]

Cleavage was measured by a cross cut test. Namely, a knife was used to cut the surface of each test specimen to form grids of 100 squares of 1 mm × 1 mm. A piece of cellophane adhesive tape was then pressed against the test piece. After a strong force was applied to the cellophane tape, the tape was peeled off. Thereafter, the number of squares which did not stick to the cellophane tape and were not removed from the test piece was counted.

As to Embodiments 1 - 9, melt flow rates were measured according to JIS-K6719. The melt flow rates of PC1 and PC2, both being Component (A), were 10 g / 10 min. and 2 g / 10 min., respectively.

**TABLE 3**

| | Component (A) | | Component (B) | | Component (C) | |
|---|---|---|---|---|---|---|
| Method | Kind | Part | Kind | Part | Kind | Part |
| Embodiment 1 b | PC1 | 80 | HIPS 4 | 20 | Copolymer 1a | 3 |
| Embodiment 2 b | PC2 | 70 | HIPS 4 | 30 | Copolymer 1a | 4 |
| Embodiment 3 b | PC1 | 60 | HIPS 1 | 40 | Copolymer 1b | 5 |
| Embodiment 4 b | PC 1 | 30 | HIPS 2 | 70 | Copolymer 1c | 3 |
| Embodiment 5 b | PC 2 | 80 | HIPS 2 | 20 | Copolymer 1e | 4 |
| Embodiment 6 b | PC 1 | 70 | HIPS 4 | 30 | Copolymer 2a | 4 |
| Embodiment 7 b | PC 1 | 90 | HIPS 1 | 10 | Copolymer 1b | 2 |
| Embodiment 8 b | PC 2 | 20 | HIPS 1 | 80 | Copolymer 1a | 2 |
| Embodiment 9 b | PC 2 | 10 | HIPS 1 | 90 | Copolymer 1b | 1 |
| *Comp. Ex. 1 b | PC 1 | 80 | HIPS 4 | 20 | - | - |
| Comp. Ex. 2 b | PC 2 | 70 | HIPS 4 | 30 | - | - |
| Comp. Ex. 3 b | PC 1 | 30 | HIPS 2 | 70 | - | - |
| Comp. Ex. 4 b | PC 1 | 70 | HIPS 1 | 30 | - | - |
| Comp. Ex. 5 b | PC 2 | 70 | HIPS 2 | 30 | - | - |
| Comp. Ex. 6 b | PC 1 | 90 | HIPS 1 | 10 | - | - |
| Comp. Ex. 7 b | PC 2 | 10 | HIPS 1 | 90 | - | - |

| | Izod impact value (J/m) | | Appearance | Cleavage | Melt flow rate |
|---|---|---|---|---|---|
| | JIS-K6719 | 2-A test piece | | | |
| Embodiment 1 | 480 | 400 | ○ | 100/100 | 20 |
| Embodiment 2 | 650 | 420 | ○ | 100/100 | 21 |
| Embodiment 3 | 820 | 370 | ○ | 100/100 | 25 |
| Embodiment 4 | 350 | 200 | ○ | 100/100 | 60 |
| Embodiment 5 | 770 | 320 | ○ | 100/100 | 15 |
| Embodiment 6 | 460 | 280 | ○ | 100/100 | 28 |
| Embodiment 7 | 630 | 360 | ○ | 100/100 | 15 |
| Embodiment 8 | 250 | 180 | ○ | 100/100 | 62 |
| Embodiment 9 | 210 | 160 | ○ | 100/100 | 71 |
| Comp. Ex. 1 | 120 | 60 | Δ | 90/100 | |
| Comp. Ex. 2 | 45 | 35 | Δ | 82/100 | |
| Comp. Ex. 3 | 40 | 35 | Δ | 85/100 | |
| Comp. Ex. 4 | 80 | 52 | Δ | 87/100 | |
| Comp. Ex. 5 | 75 | 55 | Δ | 80/100 | |
| Comp. Ex. 6 | 150 | 70 | ○ | 98/100 | |
| Comp. Ex. 7 | 45 | 41 | ○ | 100/100 | |
| NB: *Comparative Example | | | | | |

**TABLE 4**

| | Component (A) | | Component (B) | | | | Component (C) | |
|---|---|---|---|---|---|---|---|---|
| | | | B-1 | | B-2 | | | |
| Method | Kind | Part | Kind | Part | Kind | Part | Kind | Part |
| Embodiment 10 b | PA | 60 | HIPS 3 | 40 | - | - | Copolymer 1d | 5 |
| Embodiment 11 b | PA | 50 | HIPS 1 | 35 | SEBS 1 | 15 | Copolymer 1f | 6 |
| Embodiment 12 b | PBT | 60 | HIPS 1 | 40 | - | - | Copolymer 2b | 12 |
| Embodiment 13 a | PA | 60 | ABS | 40 | - | - | Copolymer 1g | 6 |
| Embodiment 14 b | PBT | 65 | SEBS 1 | 35 | - | - | Copolymer 1h | 10 |
| Embodiment 15 a | PBT | 70 | ABS | 30 | - | - | Copolymer 1i | 7 |
| Embodiment 16 b | PA | 55 | PPE | 20 | SEBS 1 | 25 | Copolymer 1j | 8 |
| Embodiment 17 b | PA | 70 | SEBS 1 | 30 | - | - | Copolymer 1d | 5 |
| Embodiment 18 b | PA | 60 | GPPS | 20 | SEBS 1 | 20 | Copolymer 1a | 5 |
| Embodiment 19 b | PC 1 | 60 | GPPS | 20 | SEBS 1 | 20 | Copolymer 1a | 5 |

| | Izod impact value (J/m) | | |
|---|---|---|---|
| | JIS-K6719 | Appearance | Cleavage |
| Embodiment 10 | 134 | ○ | 100/100 |
| Embodiment 11 | 145 | ○ | 100/100 |
| Embodiment 12 | 104 | ○ | 100/100 |
| Embodiment 13 | 176 | ○ | 100/100 |
| Embodiment 14 | 180 | ○ | 100/100 |
| Embodiment 15 | 127 | ○ | 100/100 |
| Embodiment 16 | 166 | ○ | 100/100 |
| Embodiment 17 | 165 | ○ | 100/100 |
| Embodiment 18 | 156 | ○ | 100/100 |
| Embodiment 19 | 320 | ○ | 100/100 |

**TABLE 5**

| | Component (A) | | Component (B) | | | | Component (C) | |
|---|---|---|---|---|---|---|---|---|
| | | | B-1 | | B-2 | | | |
| Method | Kind | Part | Kind | Part | Kind | Part | Kind | Part |
| *Comp. Ex. 8 a | PA | 60 | HIPS 3 | 40 | - | - | - | - |
| Comp. Ex. 9 b | PA | 70 | SEBS 1 | 30 | - | - | - | - |
| Comp. Ex. 10 b | PA | 50 | HIPS 1 | 35 | SEBS 1 | 15 | - | - |
| Comp. Ex. 11 b | PBT | 60 | HIPS 1 | 40 | - | - | - | - |
| Comp. Ex. 12 b | PA | 60 | ABS | 40 | - | - | - | - |
| Comp. Ex. 13 b | PBT | 65 | SEBS 1 | 35 | - | - | - | - |
| Comp. Ex. 14 a | PBT | 70 | ABS | 30 | - | - | - | - |
| Comp. Ex. 15 b | PA | 55 | PPE | 20 | SEBS 1 | 25 | - | - |
| Comp. Ex. 16 b | PA | 60 | GPPS | 20 | SEBS 1 | 20 | - | - |
| Comp. Ex. 17 b | PC 1 | 60 | GPPS | 20 | SEBS 1 | 20 | - | - |

| | Izod impact value (J/m) | | |
|---|---|---|---|
| | JIS-K6719 | Appearance | Cleavage |
| Comp. Ex. 8 | 15 | Δ | 85/100 |
| Comp. Ex. 9 | 60 | × | 12/100 |
| Comp. Ex. 10 | 72 | Δ | 90/100 |
| Comp. Ex. 11 | 25 | × | 15/100 |
| Comp. Ex. 12 | 65 | Δ | 85/100 |
| Comp. Ex. 13 | 65 | × | 5/100 |
| Comp. Ex. 14 | 40 | Δ | 80/100 |
| Comp. Ex. 15 | 35 | × | 6/100 |
| Comp. Ex. 16 | 34 | × | 10/100 |
| Comp. Ex. 17 | 54 | Δ | 85/100 |
| NB: *Comparative Example | | | |

As shown in Tables 3, 4 and 5, the Izod impact values of the resin compositions comprising Component (C), which is a compatibilizing agent of the present invention, were higher than the Izod impact values of the Comparative Examples in which Component (C) was not added, that is, only Components (A) and (B) were added. Further, the Izod impact values were particularly high in the Embodiments using polycarbonate as Component (A), and the high Izod impact values were also observed in the 2-A test pieces, whereby notch sensitivities were extremely decreased. Furthermore, in terms of cleavage and appearance, the moldings of the Embodiments were superior to the moldings of the Comparative Examples. Still furthermore, the fluidity of the moldings of Embodiments 1 - 9 was considered to be improved because the melt flow rates of the moldings of Embodiments 1 - 9 were higher than the melt flow rate of polycarbonate of raw material, Component (A).

(2) The case where four components, that is, Components (A), (B), (C) and (D), are used in the thermoplastic resin composition according to the present invention will hereinafter be discussed.

First, Components (C) and (D) were prepared according to the following manufacturing methods.

### [Example of manufacturing copolymer 3b, Component (C), by emulsion polymerization]

98 g of styrene, 2 g of N,N-diallylformamide, 60 g of ethylbenzene, 3 g of sodium alkylbenzenesulfonate and 397 g of water were charged to a 1000 ml flask which was equipped with a stirring apparatus, a heating apparatus, a dropping funnel, a thermometer, a reflux condensing apparatus and a nitrogen feed tube. The mixture was stirred at a high speed to disperse the monomer composition. Subsequently, the same procedure as that used for preparing copolymer la was repeated to obtain copolymer 3b. This copolymer 3b contained 0.15 % by weight of the formyl group, which was evaluated by the ratio of the peak strengths of 1660 cm⁻¹ and 1600 cm⁻¹ measured by the IR spectrum. The weight-average molecular weight of the copolymer was 6.5 × 10⁴, which was measured by gel permeation chromatography.

### [Example of manufacturing copolymer 3c, Component (C), by emulsion polymerization]

75 g of styrene, 25 g of N,N-diallylformamide, 3 g of sodium alkylbenzenesulfonate and 397 g of water were charged to a 1000 ml flask which was equipped with a stirring apparatus, a heating apparatus, a dropping funnel, a thermometer, a reflux condensing apparatus and a nitrogen feed tube. The mixture was stirred at a high speed to disperse the monomer composition. Subsequently, the same procedure as that used for preparing copolymer la was repeated to obtain copolymer 3c. This copolymer 3c contained 14.3 % by weight of the formyl group, which was evaluated by the ratio of the peak strengths of 1660 cm⁻¹ and 1600 cm⁻¹ measured by the IR spectrum. The weight-average molecular weight of the copolymer was 8.1 × 10⁴, which was measured by gel permeation chromatography.

### [Example of manufacturing copolymer 4, Component (D), by emulsion polymerization]

94 g of ethyl acrylate, 6 g of N,N-diallylformamide, 3 g of rosined soap and 397 g of water were charged to a 1000 ml flask which was equipped with a stirring apparatus, a heating apparatus, a dropping funnel, a thermometer, a reflux condensing apparatus and a nitrogen feed tube. After the mixture was stirred at a high speed to disperse the monomer composition, 30 g of an aqueous solution containing 3 % ammonium persulfate was added thereto to react at 70 °C for 4 hours. Subsequently, the reaction solution was added to a solution containing 5 % magnesium sulfate to precipitate a copolymer. The precipitated copolymer was subjected to repetitive filtration and washing by water, and then dried under reduced pressure. A copolymer 4 was thus obtained. This copolymer 4 contained 1.8 % by weight of the formyl group, which was evaluated by the ratio of the peak strengths of 1660 cm⁻¹ and 1720 cm⁻¹ measured by the IR spectrum. The weight-average molecular weight of the copolymer was 8.1 × 10⁵, which was measured by gel permeation chromatography.

### [Example of manufacturing copolymers 5 - 13, Component (D), by emulsion polymerization]

Monomers, dispersing agents and polymerization initiators shown in the following Tables 6 and 7 were used at the ratios shown in those Tables. Except for those differences, the same procedure as that used for preparing copolymer 4 was repeated so as to obtain copolymers 5 - 13 shown in Tables 6 and 7. The amounts of formyl groups contained and weight-average molecular weights of the copolymers 5 - 13 were measured by the same methods of measurement as above, and the results are also shown in Tables 6 and 7.

**TABLE 6**

| | Acrylate monomer | Monomer copolymerizable with acrylate monomer | Monomer having a formamide group | Dispersing agent |
|---|---|---|---|---|
| Copolymer 5 | Butyl acrylate 94 g | - | N,N-diallyl-formamide 6 g | Rosined soap 3 g |
| Copolymer 6 | Octyl acrylate 80 g | - | N-allyl-N-(1-methyl-2-propenyl)formamide 6 g | Sodium lauryl sulfate 2 g |
| Copolymer 7 | Lauryl acrylate 50 g Stearyl acrylate 40 g | - | N,N-diallyl-formamide 10 g | Sodium alkylbenzenesulfonate 3 g |
| Copolymer 8 | Ethyl methacrylate 100 g | - | N,N-di-(2-methyl-2-propenyl)formamide 10 g | Sodium alkylbenzenesulfonate 2 g |
| Copolymer 9 | Butyl methacrylate 100 g | - | N-allyl-N-(2-methyl-2-propenyl)formamide 10 g | Sodium lauryl sulfate 2 g |
| Copolymer 10 | Octyl acrylate 70 g Methyl methacrylate 30 g | - | N-allyl-N-(2-methyl-2-propenyl)formamide 6 g | Polyoxyethylene alkyl aryl ether 1.5 g Rosined soap 1.5 g |
| Copolymer 11 | Butyl acrylate 90 g | Styrene 30 g | N,N-diallyl-formamide 10 g | Sodium alkylbenzenesulfonate 3 g |

| | Polymerization initiator | Additive | Addition amount of formamide group-containing monomer in copolymer (mole %) | Weight-average molecular weight |
|---|---|---|---|---|
| | | | | |

| | | | | |
|---|---|---|---|---|
| Copolymer 5 | Potassium peroxosulfate 0.2 g | - | 1.6 | 8.9 × 10⁵ |
| Copolymer 6 | 2,2-azobis(2-amidino-propane)hydrochloride 0.5 g | - | 1.4 | 1.5 × 10⁵ |
| Copolymer 7 | 2,2-azobis(N,N'-dimethyleneisobutylamidine)hydrochloride 0.7 g | - | 2.1 | 9.5 × 10⁴ |
| Copolymer 8 | Potassium peroxosulfate 0.5 g | α-methylstyrene dimer 0.5 g | 1.8 | 7.1 × 10³ |
| Copolymer 9 | Potassium peroxosulfate 0.5 g | - | 2.4 | 3.2 × 10⁵ |
| Copolymer 10 | Potassium peroxosulfate 0.3 g | Benzene 180 g | 1.5 | 8.0 × 10⁴ |
| Copolymer 11 | 2,2-azobis(2-amidino-propane)hydrochloride 0.5 g | - | 1.6 | 1.1 × 10⁵ |

**TABLE 7**

| | Acrylate monomer | Monomer copolymerizable with acrylate monomer | Monomer having a formamide group | Dispersing agent |
|---|---|---|---|---|
| Copolymer 12 | Butyl acrylate 70 g | - | N,N-diallyl-formamide 30 g | Sodium alkylbenzenesulfonate 2 g |
| Copolymer 13 | Butyl acrylate 55 g | Styrene 43 g | N,N-diallyl-formamide | Sodium alkylbenzenesulfonate 2 g |

| | Polymerization initiator | Additive | Addition amount of formamide group-containing monomer in copolymer (mole %) | Weight-average molecular weight |
|---|---|---|---|---|
| Copolymer 12 | Potassium peroxosulfate 0.8 g | - | 16.8 | 2.2 × 10⁴ |
| Copolymer 13 | Potassium peroxosulfate 0.3 g | - | 0.5 | 5.3 × 10⁵ |

### [Example of manufacturing copolymer 14, Component (D), by solution polymerization]

100 g of butyl acrylate, 6 g of N,N-diallylformamide, 400 g of benzene and 1 g of benzoyl peroxide were charged to a 1000 ml flask which was equipped with a stirring apparatus, a heating apparatus, a thermometer, a reflux condensing apparatus and a nitrogen feed tube. The mixture was then heated to 70 °C and allowed to react for 5 hours. Subsequently, the reaction solution was reduced in pressure and dried at 40 °C to precipitate a copolymer. The precipitated copolymer was subjected to repetitive washing by hexane, and then dried under reduced pressure. A copolymer 14 was thus obtained. This copolymer 14 contained 1.5 % by weight of the formyl group, which was evaluated by the ratio of the peak strengths of 1660 cm⁻¹ and 1720 cm⁻¹ measured by the IR spectrum. The weight-average molecular weight of the copolymer was 7.5 × 10⁴, which was measured by gel permeation chromatography.

### [Example of manufacturing comparative copolymer 1, Component (C), of Comparative Embodiment 1 by solution polymerization]

40 g of styrene, 60 g of methyl acrylate, 6 g of N,N-diallylformamide, 400 g of benzene and 1 g of benzoyl peroxide were charged to a 1000 ml flask which was equipped with a stirring apparatus, a heating apparatus, a thermometer, a reflux condensing apparatus and a nitrogen feed tube. The mixture was then heated to 70 °C and allowed to react for 5 hours. Subsequently, the reaction solution was reduced in pressure and dried at 40 °C to precipitate a copolymer. The precipitated copolymer was subjected to repetitive washing by hexane, and then dried under reduced pressure. A comparative copolymer 1 was thus obtained. This comparative copolymer 1 contained 1.6 % by weight of the formyl group, which was evaluated by the ratio of the peak strengths of 1660 cm⁻¹ and 1600 cm⁻¹ measured by the IR spectrum. The weight-average molecular weight of the comparative copolymer was 3.6 × 10⁴, which was measured by gel permeation chromatography.

### [Example of manufacturing comparative copolymer 2, Component (D), of Comparative Embodiment 2 by solution polymerization]

40 g of butyl acrylate, 60 g of styrene, 6 g of N,N-diallylformamide, 400 g of benzene and 1 g of benzoyl peroxide were charged to a 1000 ml flask which was equipped with a stirring apparatus, a heating apparatus, a thermometer, a reflux condensing apparatus and a nitrogen feed tube. The mixture was then heated to 70 °C and allowed to react for 5 hours. Subsequently, the reaction solution was reduced in pressure and dried at 40 °C to precipitate a copolymer. The precipitated copolymer was subjected to repetitive washing by hexane, and then dried under reduced pressure. A comparative copolymer 2 was thus obtained. This comparative copolymer 2 contained 1.8 % by weight of the formyl group, which was evaluated by the ratio of the peak strengths of 1660 cm⁻¹ and 1720 cm⁻¹ measured by the IR spectrum. The weight-average molecular weight of the comparative copolymer was 6.5 × 10⁴, which was measured by gel permeation chromatography.

### EMBODIMENTS 20 - 36, COMPARATIVE EMBODIMENTS 1 AND 2, AND COMPARATIVE EXMPLES 18 - 29

First, the resins used for Components (A) and (B), were obtained, respectively, as shown in the following.

### [Resins for Component (A)]

PC3: polycarbonate (Panlite L1250, manufactured by Teijin Chemical Limited)
PA: polyamide (Leona 1300S, manufactured by Asahi Chemical Industry Co., Ltd.)
PBT: polybutylene terephthalate (Toray PBT resin 1401-X06, manufactured by Toray Industries, Inc.)

### [Resins for Component (B)]

HIPS1: high impact polystyrene (Sumibrite DJ-7000, manufactured by Sumitomo Chemical Company, Limitd)
HIPS5: high impact polystyrene (Idemitsu styrol HT-52, manufactured by Idemitsu Sekiyu Kagaku Co., Ltd.)
HIPS6: high impact polystyrene (Idemitsu styrol HT-55, manufactured by Idemitsu Sekiyu Kagaku Co., Ltd.)
HIPS7: high impact polystyrene (Styron H8652, manufactured by Asahi Chemical Industry Co., Ltd.)
ABS: ABS resin (Toyorak 500, manufactured by Toray Industries, Inc.)
SEBS2: SEBS resin (Tuftec H1041, manufactured hy Asahi Chemical Industry Co., Ltd.)
PPE: polyphenylene ether resin (Iupiace AH-40, manufactured by Mitsubishi Engineering-Plastics Corporation)
GPPS: polystyrene resin (Estyrene G-20, Nippon Steel Chemical Corporation Limited)

Components (A), (B), (C) and (D) shown in undermentioned Tables 8 - 11 were mixed in the ratios shown in those Tables to prepare thermoplastic resin compositions according to the following method. That is, Components (A), (B), (C) and (D) shown in Tables 8 - 11 were dry-blended at the ratios shown in those Tables and then dried. The blend was then melted and mixed by a double screw extruder (KRC kneader, manufactured by Kurimoto Tekkosho). The mixture thereafter was taken out and pelletized to obtain a thermoplastic resin composition of a four- component type).

The thermoplastic resin composition of a four-component type thus obtained were processed by an injection molding machine (Hipershot 3000, manufactured by Niigata Tekkosho) to obtain moldings. The moldings were measured and evaluated according to the following evaluation methods in terms of Izod impact strength, weld strength, appearance and cleavage, and the results are shown in Tables 8 - 11.

### [Izod impact strength]

As mentioned heretofore, Izod impact values were measured according to JIS K-6719, at a measuring temperature of 23 °C. In order to consider thickness dependency, Izod impact values of 2-A test pieces (12,7 mm thickness) according to JIS-7110 were also measured and shown for Embodiments 20 - 27, 32 - 36, Comparative Embodiments 1 and 2, Comparative Examples 18 - 24, and 29.

### [Weld strength]

A tension test was conducted according to JIS-K7113 on a test piece having the same shape as that of the 2-A test piece according to JIS-K7113. Namely, the test piece was prepared by injection molding using a metal mold which had both end portions and a center portion, in which melted resins were poured into the both end portions so that the both tips of the resins adhered in the center portion.

### [Appearance]

The same evaluation procedure was repeated as heretofore mentioned. Moldings with good appearance are marked with ○, those with a somewhat defective appearance are marked with Δ and those with defective appearance are marked with × .

### [Presence or absence of interlaminar cleavage]

Cleavage was evaluated by the cross cut test, as mentioned heretofore.

**TABLE 8**

| | Component (A) | | Component (B) | | Component (C) | | Component (D) | |
|---|---|---|---|---|---|---|---|---|
| | Kind | Part | Kind | Part | Kind | Part | Kind | Part |
| Embodiment 20 | PC3 | 70 | HIPS 1 | 30 | Copolymer 1a | 3 | Copolymer 4 | 2 |
| *Comp. Ex. 18 | PC3 | 70 | HIPS 1 | 30 | - | - | - | - |
| Embodiment 21 | PC3 | 70 | HIPS 5 | 30 | Copolymer 1a | 3 | Copolymer 4 | 2 |
| Comp. Ex. 19 | PC3 | 70 | HIPS 5 | 30 | - | - | - | - |
| Embodiment 22 | PC3 | 80 | HIPS 7 | 20 | Copolymer 1a | 3 | Copolymer 4 | 2 |
| Comp. Ex. 20 | PC3 | 80 | HIPS 7 | 20 | - | - | - | - |
| Embodiment 23 | PC3 | 70 | HIPS 7 | 30 | Copolymer 1a | 3 | Copolymer 4 | 2 |
| Comp. Ex. 21 | PC3 | 70 | HIPS 7 | 30 | - | - | Copolymer 4 | 2 |
| Comp. Ex. 22 | PC3 | 70 | HIPS 7 | 30 | - | - | - | - |

| | Izod impact value (J/m) | | Weld strength | | |
|---|---|---|---|---|---|
| | JIS-K6719 | 2-A test piece | (MPa) | Appearance | Cleavage |
| Embodiment 20 | 618 | 421 | 26.5 | ○ | 100/100 |
| Comp. Ex. 18 | 73 | 31 | 16.3 | Δ | 91/100 |
| Embodiment 21 | 510 | 411 | 23.5 | ○ | 100/100 |
| Comp. Ex. 19 | 320 | 121 | 18.1 | ○ | 85/100 |
| Embodiment 22 | 510 | 390 | 25.0 | ○ | 100/100 |
| Comp. Ex. 20 | 86 | 45 | not adhered | ○ | 88/100 |
| Embodiment 23 | 351 | 220 | 23.0 | ○ | 100/100 |
| Comp. Ex. 21 | 105 | 30 | not adhered | Δ | 70/100 |
| Comp. Ex. 22 | 20 | 16 | not adhered | Δ | 68/100 |
| *NB: Comparative Example | | | | | |

**TABLE 9**

| | Component (A) | | Component (B) | | Component (C) | | Component (D) | |
|---|---|---|---|---|---|---|---|---|
| | Kind | Part | Kind | Part | Kind | Part | Kind | Part |
| Embodiment 24 | PC3 | 70 | HIPS 7 | 30 | Copolymer 1a | 2 | Copolymer 5 | 2 |
| Embodiment 25 | PC3 | 70 | HIPS 6 | 30 | Copolymer 1a | 2 | Copolymer 6 | 1 |
| Embodiment 26 | PC3 | 70 | HIPS 6 | 30 | Copolymer 1a | 3 | Copolymer 7 | 2 |
| *Comp. Ex. 23 | PC3 | 70 | HIPS 6 | 30 | - | - | - | - |
| Embodiment 27 | PC3 | 60 | HIPS 6 | 40 | Copolymer 1a | 5 | Copolymer 8 | 5 |
| Comp. Ex. 24 | PC3 | 60 | HIPS 6 | 60 | - | - | - | - |
| Comparative | | | | | Comparative | | | |
| Embodiment 1 | PC3 | 70 | HIPS 7 | 30 | Copolymer 1 | 3 | Copolymer 4 | 2 |
| Comparative | | | | | | | Comparative | |
| Embodiment 2 | PC3 | 70 | HIPS 7 | 30 | Copolymer 1a | 3 | Copolymer 2 | 2 |

| | Izod impact value (J/m) | | Weld strength | | |
|---|---|---|---|---|---|
| | JIS-K6719 | 2-A test piece | (MPa) | Appearance | Cleavage |
| Embodiment 24 | 324 | 215 | 20.4 | ○ | 100/100 |
| Embodiment 25 | 323 | 200 | 22.3 | ○ | 100/100 |
| Embodiment 26 | 285 | 205 | 21.5 | ○ | 100/100 |
| Comp. Ex. 23 | 28 | 14 | not adhered | Δ | 68/100 |
| Embodiment 27 | 218 | 164 | 17.9 | ○ | 100/100 |
| Comp. Ex. 24 | 21 | 16 | not adhered | Δ | 55/100 |
| Comparative | | | | | |
| Embodiment 1 | 120 | 35 | 14.5 | ○ | 70/100 |
| Comparative | | | | | |
| Embodiment 2 | 57 | 30 | 17.0 | ○ | 100/100 |
| *NB: Comparative Example | | | | | |

**TABLE 10**

| | Component (A) | | Component (B) | | Component (C) | | Component (D) | |
|---|---|---|---|---|---|---|---|---|
| | Kind | Part | Kind | Part | Kind | Part | Kind | Part |
| Embodiment 28 | PA | 60 | HIPS 6 | 40 | Copolymer 1a | 5 | Copolymer 9 | 7 |
| Embodiment 29 | PA | 60 | ABS | 40 | Copolymer 1a | 5 | Copolymer 10 | 5 |
| Embodiment 30 | PBT | 70 | SEBS 2 | 30 | Copolymer 1a | 10 | Copolymer 11 | 10 |
| Embodiment 31 | PA | 60 | PPE | 40 | Copolymer 1a | 6 | Copolymer 14 | 10 |
| *Comp. Ex. 25 | PA | 60 | HIPS 6 | 40 | - | - | - | - |
| Comp. Ex. 26 | PA | 60 | ABS | 40 | - | - | - | - |
| Comp. Ex. 27 | PBT | 70 | SEBS 2 | 30 | - | - | - | - |
| Comp. Ex. 28 | PA | 60 | PPE | 40 | - | - | - | - |

| | Izod impact value (J/m) | Weld strength | | |
|---|---|---|---|---|
| | JIS-K6719 | (MPa) | Appearance | Cleavage |
| Embodiment 28 | 154 | 15.1 | ○ | 100/100 |
| Embodiment 29 | 195 | 17.5 | ○ | 100/100 |
| Embodiment 30 | 210 | 15.2 | ○ | 100/100 |
| Embodiment 31 | 150 | 16.2 | ○ | 100/100 |
| Comp. Ex. 25 | 15 | not adhered | Δ | 82/100 |
| Comp. Ex. 26 | 72 | not adhered | Δ | 83/100 |
| Comp. Ex. 27 | 65 | not adhered | × | 5/100 |
| Comp. Ex. 28 | 32 | not adhered | × | 25/100 |
| *NB: Comparative Example | | | | |

**TABLE 11**

| | Component (A) | | Component (B) | | Component (C) | | Component (D) | |
|---|---|---|---|---|---|---|---|---|
| | Kind | Part | Kind | Part | Kind | Part | Kind | Part |
| Embodiment 32 | PC3 | 70 | GPPS | 30 | Copolymer 1a | 3 | Copolymer 4 | 12 |
| *Comp. Ex. 29 | PC3 | 70 | GPPS | 30 | - | - | - | - |
| Embodiment 33 | PC3 | 70 | HIPS 7 | 30 | Copolymer 3c | 0.05 | Copolymer 4 | 2 |
| Embodiment 34 | PC3 | 70 | HIPS 7 | 30 | Copolymer 3b | 20 | Copolymer 4 | 2 |
| Embodiment 35 | PC3 | 70 | HIPS 7 | 30 | Copolymer 1a | 3 | Copolymer 12 | 0.05 |
| Embodiment 36 | PC3 | 70 | HIPS 7 | 30 | Copolymer 1a | 3 | Copolymer 13 | 20 |

| | Izod impact value (J/m) | | Weld strength (Mpa) | Appearance | Cleavage |
|---|---|---|---|---|---|
| | JIS-K6719 | 2-A test piece | | | |
| Embodiment 32 | 258 | 194 | 22.5 | ○ | 100/100 |
| Comp. Ex. 29 | 32 | 25 | 16.7 | Δ | 100/100 |
| Embodiment 33 | 320 | 210 | 20.1 | ○ | 100/100 |

| | | | | | |
|---|---|---|---|---|---|
| Embodiment 34 | 310 | 197 | 22.5 | ○ | 100/100 |
| Embodiment 35 | 280 | 175 | 22.0 | ○ | 100/100 |
| Embodiment 36 | 360 | 182 | 21.8 | ○ | 100/100 |
| *NB: Comparative Example | | | | | |

From the results shown in Tables 8 - 11, all the moldings of Embodiments comprising four components, that is, Components (A), (B), (C) and (D), were high in both the Izod impact value and weld strength. Moreover, there were no problems with their appearance, and good results were obtained in terms of cleavage. On the other hand, the moldings of Comparative Examples 18 - 29 comprising two components, that is, Components (A) and (B), were extremely low in the Izod impact value. Weld strength was also low or "not adhered". Further, the moldings of those Comparative Examples had inferior appearance and had poor results in the cleavage evaluation test. With respect to Comparative Embodiments 1 and 2, each result of the evaluation was lower than that of the moldings of the Embodiments, but higher than that of the moldings of the Comparative Examples.

In addition, in Embodiment 20, a thermoplastic resin composition was prepared by substituting PC3 alone for PC3 and PA as Component (A) and HIPS 1 alone for HIPS 1 and PPE as Component (B). The thermoplastic resin composition thus obtained was evaluated in the same manner as above. This molding was, as were all the moldings of the Embodiments, high in both the Izod impact value and weld strength, had no problems with its appearance, and showed a good result in terms of cleavage.

### EFFECT OF THE INVENTION

As described heretofore, the present invention provides a thermoplastic resin composition, in which a copolymer (Component (C)), consisting essentially of a monomer having a formamide group represented by the above general formula (1) and an aromatic vinyl type monomer, is used as a compatibilizing agent in Components (A) and (B). As a result, Components (A) and (B) are compatible with each other, and the resultant thermoplastic resin composition has excellent impact resistance and melt fluidity and presents good appearance when molded, without interlaminar cleavage.

In addition, when a copolymer (Component (D)), comprising monomers consisting essentially of a monomer having a formamide group represented by the above-mentioned general formula (1) and at least one of an acrylate monomer and a methacrylate monomer, is further used as a new compatibilizing agent, together with Component (C), the resultant thermoplastic resin composition is optimized due to the further improved affinity between Components (A) and (B). At the same time, such a thermoplastic resin composition is improved in impact resistance and melt fluidity over the composition comprising Components (A), (B) and (C). Furthermore, the thermoplastic resin composition thus obtained is good in appearance without interlaminar cleavage and is improved in weld strength.

Sufficient improved effects on impact resistance, in addition to a further improved miscibility between Components (A) and (B), may be obtained when an element derived from a monomer having the formamide group is contained at 0.05 to 20 % by weight and an element derived from the aromatic vinyl type monomer is contained at not less than 60 % by weight of Component (C). In the meantime, sufficient improved effects on impact resistance and weld strength, in addition to a further improved miscibility between Components (A) and (B), may be obtained when an element derived from a monomer having the formamide group is contained at 0.05 to 20 % by weight and an element derived from at least one of an acrylate monomer and a methacrylate monomer is contained at not less than 50 % by weight of Component (D).

## Claims

1. A thermoplastic resin composition comprising the following Components (A), (B) and (C):
(A) at least one resin selected from a polycarbonate resin, a polyamide resin and a polyester resin,
(B) at least one of a styrene type resin and a polyphenylene ether resin, and
(C) a copolymer comprising monomers consisting essentially of a monomer having a formamide group represented by the following general formula (1) and an aromatic vinyl type monomer: 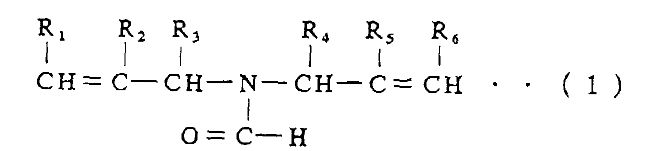 wherein R₁, R₂, R₃, R₄, R₅ and R₆, which are the same or different, represent a hydrogen atom, an alkyl group with 1 to 8 carbon atoms, a cycloalkyl group with 6 to 10 carbon atoms, an alkyl aryl group with 6 to 10 carbon atoms, or an arylalkyl group with 6 to 10 carbon atoms.

2. A thermoplastic resin composition according to claim 1, wherein an element derived from the formamide group-containing monomer is contained at 0.05 to 20 % by weight and an element derived from the aromatic vinyl type monomer is contained at not less than 60 % by weight of Component (C).

3. A thermoplastic resin composition according to claim 1 or 2, wherein Component (C) is contained at 0.05 to 20 parts by weight for 100 parts by weight of the total of Components (A) and (B).

4. A thermoplastic resin composition according to claim 1 , 2 or 3, further containing Component (D) wherein,
Component (D) is a copolymer comprising monomers consisting essentially of a monomer having a formamide group represented by the following general formula (1) and at least one of an acrylate monomer and a methacrylate monomer: 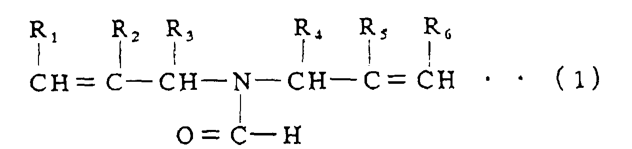 wherein R₁, R₂, R₃, R₄, R₅ and R₆, which are the same or different, represent a hydrogen atom, an alkyl group with 1 to 8 carbon atoms, a cycloalkyl group with 6 to 10 carbon atoms, an alkyl aryl group with 6 to 10 carbon atoms, or an arylalkyl group with 6 to 10 carbon atoms.

5. A thermoplastic resin composition according to claim 4, wherein an element derived from the formamide group-containing monomer is contained at 0.05 to 20 % by weight and an element derived from at least one of the acrylate monomer and the methacrylate monomer is contained at not less than 50 % by weight of Component (D).

6. A thermoplastic resin composition according to claim 4 or 5, wherein Component (D) is contained at 0.05 to 20 parts by weight for 100 parts by weight of the total of Components (A) and (B).

7. A thermoplastic resin composition according to any of claims 1 to 6, wherein a mixing ratio by weight of Components (A) / (B) is in the range of 10 to 90 / 10 to 90.

8. Compatibilizing agent comprising a copolymer comprising monomers consisting essentially of a monomer having a formamide group represented by the following general formula (1) and an aromatic vinyl type monomer: 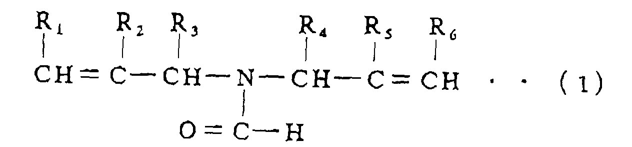 wherein R₁, R₂, R₃, R₄, R₅ and R₆, which are the same or different, represent a hydrogen atom, an alkyl group with 1 to 8 carbon atoms, a cycloalkyl group with 6 to 10 carbon atoms, an alkyl aryl group with 6 to 10 carbon atoms, or an arylalkyl group with 6 to 10 carbon atoms.

9. Compatibilizing agent comprising a copolymer comprising monomers consisting essentially of a monomer having a formamide group represented by the following general formula (1) and at least one of an acrylate monomer and a methacrylate monomer: 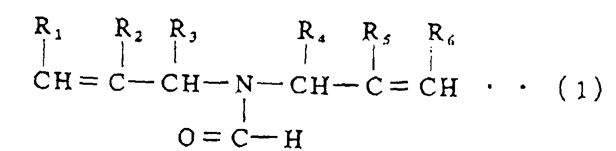 wherein R₁, R₂, R₃, R₄, R₅ and R₆, which are the same or different, represent a hydrogen atom, an alkyl group with 1 to 8 carbon atoms, a cycloalkyl group with 6 to 10 carbon atoms, an alkyl aryl group with 6 to 10 carbon atoms, or an arylalkyl group with 6 to 10 carbon atoms.
